# EUROPÄISCHE PATENTANMELDUNG

(11) **EP 1 384 931 A1**
(43) Veröffentlichungstag der Anmeldung: **28.01.2004**
(21) Anmeldenummer: 03015330.8
(22) Anmeldetag: 07.07.2003
(51) Int. Cl.: F16L 13/00

(54) **Isolierung und Verfahren zur Isolierung der Schweissverbindungen von mit Ausnahme vom Bereich der Schweisszone isolierten Rohren**

(30) Priorität: 27.07.2002 DE 10234320
(71) Anmelder: Stucke, Walter, 40878 Ratingen (DE)
(72) Erfinder: Stucke, Walter, 40878 Ratingen (DE)
(74) Vertreter: Kaewert, Klaus

(57) **Zusammenfassung**

Die vorliegende Erfindung betrifft ein Verfahren zur Isolierung der Schweißverbindung (19) von mit Ausnahme vom Bereich der Schweißzone (3) isolierten Rohren (2), insbesondere von 3-Schichten-korrosionsgeschützten Stahlrohren (2), wobei vor dem Verschweißen der miteinander zu verschweißenden Rohre (2) ein Schrumpfschlauch (7) auf eines der Rohre (2) aufgeschoben wird, die Rohre (2) miteinander verschweißt werden, im Bereich der Schweißzone (3) eine Epoxidharzschicht (18) aufgebracht wird, im Bereich von der Schweißzone bis zu einer äußersten Isolierschicht (6) der Rohre (2) eine Kleberschicht (18) aufgebracht wird, der Schrumpfschlauch (7) über den Bereich der Schweißzone (3) verschoben wird, so daß zumindest die mit der Kleberschicht (18) versehenen Bereiche vom Schrumpfschlauch (7) abgedeckt sind, und der Schrumpfschlauch (7) aufgeschrumpft wird, so daß der Kleber (14) aus dem Schrumpfschlauch (7) den Schrumpfschlauch dichtschließend austritt und sich oberhalb der Epoxidharzschicht (17) verteilt. Darüberhinaus betrifft die vorliegende Erfindung eine nach dem Verfahren hergestellte Isolierung.

## Beschreibung

Die vorliegende Erfindung betrifft ein Verfahren zur Isolierung der Schweißverbindung von mit Ausnahme vom Bereich der Schweißzone isolierten Rohren, insbesondere von 3-Schichten korrosionsgeschützten Stahlrohren, sowie eine nach dem Verfahren hergestellte Isolierung.

Um einen belastungsfähigen Korrosionsschutz für Groß- und Leitungsrohre bereitzustellen, welcher sowohl bei schwierigen Bodenverhältnissen als auch bei erhöhten Betriebstemperaturen beständig ist, werden die Rohre, insbesondere Stahlrohre, im Stand der Technik mit einem 3-Schichten-Korrosionsschutz versehen, bestehend aus einer Duroplastgrundschicht, einer Kleberschicht und einer Polyethylenschicht. Zur Herstellung so korrosionsgeschützter Stahlrohre sind verschiedene Herstellungsverfahren bekannt, bspw. Extrusion-Schrägkopfverfahren und Extrusion-Wickelverfahren, die in Abhängigkeit der Rohrdurchmessser der zu isolierenden Rohre zum Einsatz kommen. Die Enden der miteinander zu verschweißenden Rohre weisen dabei im Bereich der Schweißzone keine Isolierung auf, da diese beim Schweißen stören bzw. dabei die übrige Isolierung der Rohre beschädigt werden könnte.

Zur Isolierung der Schweißverbindung miteinander verschweißter Rohre sind verschiedene Isolierklebe- und Wickelbinden verwendende Klebesysteme bekannt, bspw. aus der deutschen Patentschrift 1 302 738. Bei den bisher bekannten Isolierungen ist es dabei von Nachteil, daß die nach dem Verschweißen der Rohre zur Isolierung aufgebrachten Materialien aufgrund unzureichender Haftung untereinander und hinsichtlich der Isolierungen der Rohre Feuchtigkeit in den Bereich der Schweißzone gelangen lassen, bspw. im Rahmen der Isolierung mit eingeschlossene Feuchtigkeit, die die Rohre im Bereich der Schweißverbindung stärker korrodieren läßt und damit ein frühzeitiges Austauschen der Rohre erforderlich macht.

Der Erfindung liegt in Anbetracht dieses Standes der Technik die **Aufgabe** zugrunde, eine Isolierung der Schweißverbindung von mit Ausnahme vom Bereich der Schweißzone isolierten Rohren zu schaffen, welche unter Meidung der beschriebenen Nachteile einen besseren und belastungsfähigeren Korrosionsschutz im Bereich der Schweißzone bereitstellt.

Zur **Lösung** dieser Aufgabe wird mit der vorliegenden Erfindung ein Verfahren zur Isolierung der Schweißverbindung von mit Ausnahme vom Bereich der Schweißzone isolierten Rohren, insbesondere von 3-Schichtenkorrosionsgeschützten Stahlrohren, angegeben, wobei
vor dem Verschweißen der miteinander zu verschweißenden Rohre ein Schrumpfschlauch auf eines der Rohre aufgeschoben wird,
die Rohre miteinander verschweißt werden,
im Bereich der Schweißzone eine Epoxidharzschicht aufgebracht wird,
im Bereich von der Schweißzone bis zu einer äußersten Isolierschicht der Rohre eine Kleberschicht aufgebracht wird,
der Schrumpfschlauch über den Bereich der Schweißzone verschoben wird, so daß zumindest die mit Kleber versehenen Bereiche vom Schrumpfschlauch abgedeckt sind, und
der Schrumpfschlauch aufgeschrumpft wird, so daß der Kleber aus dem Schrumpfschlauch den Schrumpfschlauch dichtschließend austritt und sich oberhalb der Epoxidharzschicht verteilt.

Erfindungsgemäß wird so im Bereich der Schweißzone eine Isolierung ausgebildet, die eine besonders gute Haftung an den Rohren, den aufgebrachten Schichten untereinander und gegenüber den bereits vorhandenen Isolierschichten der Rohre aufweist. Durch den erfindungsgemäßen Aufbau der Isolierung, insbesondere durch die Verwendung des Schrumpfschlauches, wird dabei verhindert, daß innerhalb des Schrumpfschlauches Feuchtigkeit eingeschlossen werden kann, die ansonsten zu Korrosionen im Bereich der Schweißzone führen würde. Dabei wird gegebenenfalls vorhandene Feuchtigkeit aufgrund der beim Aufschrumpfen des Schrumpfschlauches gegebenen Wärmeeinwirkung eliminiert.

Gemäß einer vorteilhaften Ausgestaltung der Erfindung wird das Epoxidharz in Pulverform aufgebracht, wobei vorteilhafterweise Pulver mit einem mittleren Korndurchmesser zwischen 10 um und 20 um verwendet wird, um die mittlere Rauhtiefe der Oberfläche der Rohre im Bereich der Schweißzone, die etwa zwischen 40 um und 50 um beträgt, nicht zu vergrößern. Um ein gleichmäßiges und insbesondere Feuchtigkeit ausschließendes Auftragen der Epoxidharzschicht zu gewährleisten, werden die miteinander verschweißten Rohre im Bereich der Schweißzone vor dem Aufbringen des Epoxidharzes erwärmt, vorteilhafterweise induktiv oder konduktiv, wobei besonders vorteilhafterweise von der Schweißzone aus in Richtung der Rohrenden ein von etwa 130° C auf etwa 80° C hin abnehmender Temperaturverlauf eingestellt wird. Ein solcher Temperaturverlauf läßt sich besonders einfach mittels induktiver Erwärmung einstellen. Dabei erfolgt die Leistungsübertragung zur Erwärmung nach dem Prinzip eines Transformators, wobei eine von Wechselströmen durchflossene und ein Wechselfeld erzeugende Arbeitsspule, welche im Bereich der Schweißzone die miteinander verschweißten Rohre umgibt, die Funktion der Primärwicklung und das Werkstück, im vorliegenden Fall die miteinander verschweißten Rohre im Bereich der Schweißzone, die Funktion einer kurzgeschlossenen Sekundärspule übernimmt. Die Eindringtiefe der Wirbelströme entspricht der Tiefe der erwärmten Schicht im Bereich der Schweißzone und ist frequenzabhängig. Bei hohen Frequenzen erfolgt vor allem in den oberflächennahen Schichten eine rasche Erwärmung, die vorliegend zum Aufschmelzen des Epoxidharzpulvers zum Ausbilden der Epoxidharzschicht verwendet wird. Vorteilhafterweise wird ein Epoxidharz verwendet, welches eine Glasübergangstemperatur von etwa 65° C aufweist. Dadurch kann gewährleistet werden, daß die bereits vorhandene Isolierung auf den zu verschweißenden Rohren bei der Erwärmung zum Aufbringen der Epoxidharzschicht nicht beschädigt oder zerstört wird. Das verwendete Epoxidharzpulver reagiert dabei vorteilhafterweise bei Temperaturen zwischen 105° C und 130° C.

Gemäß einer weiteren vorteilhaften Ausgestaltung der Erfindung wird das Pulver mit einem gasförmigen Medium durch ein Sieb auf die miteinander verschweißten Rohre im Bereich der Schweißzone aufgeblasen, wobei vorzugsweise Sauerstoff oder Stickstoff verwendet werden. Vorteilhafterweise ist das gasförmige Medium dabei erwärmt, vorzugsweise auf eine Temperatur zwischen 30° C und 60° C, um ein Abkühlen der induktiv im Bereich der Schweißzone erwärmten Rohre durch das Aufblasen des Epoxidharzpulvers zu vermeiden. In einer weiteren vorteilhaften Ausgestaltung der Erfindung wird das Epoxidharzpulver durch ein Wirbelsinterverfahren aufgebracht.

Gemäß einer weiteren vorteilhaften Ausgestaltung der Erfindung wird der Kleber in Pulverform aufgebracht, vorteilhafterweise wie das Epoxidharz mittels einem gasförmigen Medium durch ein Sieb auf die Rohre geblasen.

Die erfindungsgemäße Isolierung eignet sich sowohl zum Isolieren von neuverlegten und miteinander verschweißten Rohren, als auch zur Nachisolierung im Rahmen von Ausbesserungen bzw. Reparaturen bereits verlegter Rohre. Erfindungsgemäß wird dabei die bereits vorhandene Isolierung der Rohre im Bereich der Schweißzone hinsichtlich des Aufbaus nachgebildet.

Weitere Einzelheiten, Merkmale und Vorteile der Erfindung werden nachfolgend anhand des in den Figuren dargestellten Ausführungsbeispiels näher erläutert. Dabei zeigen:
- Fig. 1: in einer geschnitten dargestellten Seitenansicht zwei miteinander verschweißte Rohre vor dem Aufbringen der Epoxidharz- und Kleberschicht;
- Fig. 2: in einer geschnitten dargestellten Seitenansicht, die miteinander verschweißten Rohre gemäß Fig. 1 nach dem Aufbringen der Epoxidharz- und Kleberschicht und
- Fig. 3: in einer geschnitten dargestellten Seitenansicht, die miteinander verschweißten Rohre gemäß Fig. 1 und 2 nach dem Aufbringen der erfindungsgemäßen Isolierung der Schweißverbindung.

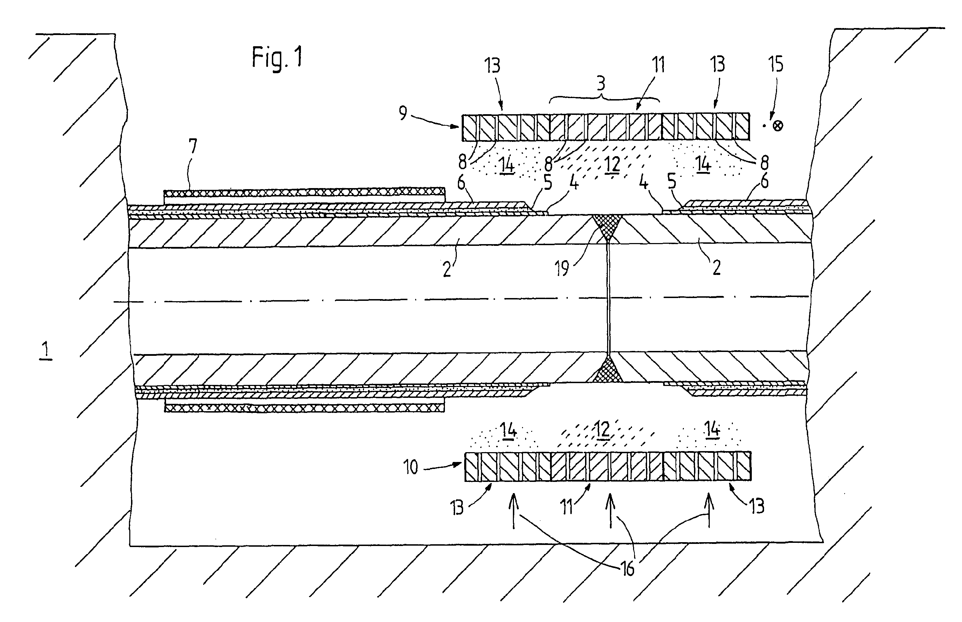

Fig. 1 zeigt zwei in einer Baugrube 1 angeordnete und im Bereich der Schweißzone 3 miteinander verschweißte Stahlrohre 2. Die Stahlrohre 2 sind 3-Schichten-korrosionsgeschützt und weisen eine duroplastische Grundschicht 4 aus einem Epoxidharz mit einer Dicke von etwa 0,05 mm, eine Kleberschicht 5 aus einem Polyethylen-Copolymerisat mit einer Dicke von etwa 0,2 mm und eine äußere Polyethylenschicht 6 als thermoplastische Kunststoffisolierschicht mit einer Dicke von etwa 3 mm auf. Wie anhand der Fig. 1 bis 3 zu erkennen, sind die Isolierschichten 4, 5 und 6 der Stahlrohre 2 im Bereich der unisolierten Rohrenden zum Bereich der Schweißzone 3 hin angefast sind. Die Oberflächen der im Bereich der Schweißzone 3 unisolierten Enden der Stahlrohre 2 sind dabei vor dem Verschweißen zur Säuber- und Reinigung gestrahlt worden, so daß diese weitestgehend rostfrei sind. Wie in Fig. 1 zu erkennen, wurde auf das in Fig. 1 dargestellte Stahlrohr 2 vor dem Verschweißen ein Schrumpfschlauch 7 aus Polyethylen aufgeschoben.

Weiter sind in Fig. 1 im Bereich der Schweißzone 3 oberhalb und unterhalb der miteinander verschweißten Stahlrohre 2 mit Sieböffnungen 8 versehene Behälter 9 und 10 angeordnet. Die Behälter 9 und 10 weisen jeweils im Bereich der Schweißzone 3 ein Fach 11 zur Aufnahme von pulverförmigen Epoxidharz 12 und neben dem Fach 11 jeweils Fächer 13 zur Aufnahme von pulverförmigen Kleber 14 auf, wobei sich die Fächer 13 im Bereich von der Schweißzone 3 bis zur Polyethylenschicht 6 der Isolierung der Stahlrohre 2 erstrecken. Wie in Fig. 1 anhand der mit 15 gekennzeichneten Pfeile dargestellt, lassen sich das pulverförmige Epoxidharz 12 und der pulverförmige Kleber 14 aus dem Behälter 9 durch entsprechende Rüttelbewegungen in Richtung der Pfeile 15 auf der von oben zugänglichen Oberfläche der Stahlrohre 2 und deren Isolierungen 4, 5 und 6 auftragen. Bei dem unterhalb der Stahlrohre 2 angeordneten Behälter 10 werden das pulverförmige Epoxidharz 12 und der pulverförmige Kleber 14 aus den Fächern 11 bzw. 13 durch die Sieböffnungen 8 mittels auf etwa 30° C vorgewärmten Stickstoff ausgeblasen, wie anhand der mit 16 gekennzeichneten Pfeile dargestellt.

Zum Ausbilden einer Epoxidharzschicht aus dem pulverförmig aufgetragenen Epoxidharz 12 im Bereich der Schweißzone 3 ist die Schweißzone 3 mittels einer, hier nicht dargestellten, die Schweißzone 3 der Stahlrohre 2 umgebenden Induktionsspule induktiv erwärmt, wobei von der Schweißzone 3 in Richtung der isolierten Bereiche der Stahlrohre 2 ein Temperaturverlauf von 130° C abnehmend auf etwa 80° C eingestellt ist. Das auf die induktiv erwärmten Bereiche der Stahlrohre 2 aufgetragene pulverförmige Epoxidharz 12 und der in den Bereichen außerhalb der Schweißzone 3 aufgetragene pulverförmige Kleber 14 werden dabei als Schicht ausgebildet. Zusätzlich wird durch die induktive Erwärmung Feuchtigkeit aus dem Bereich der Schweißzone 3 und den sich von der Schweißzone 2 bis zu der Polyethylenschicht 6 der Isolierungen 4, 5 und 6 der Stahlrohre 2 anschließenden Bereiche entfernt.

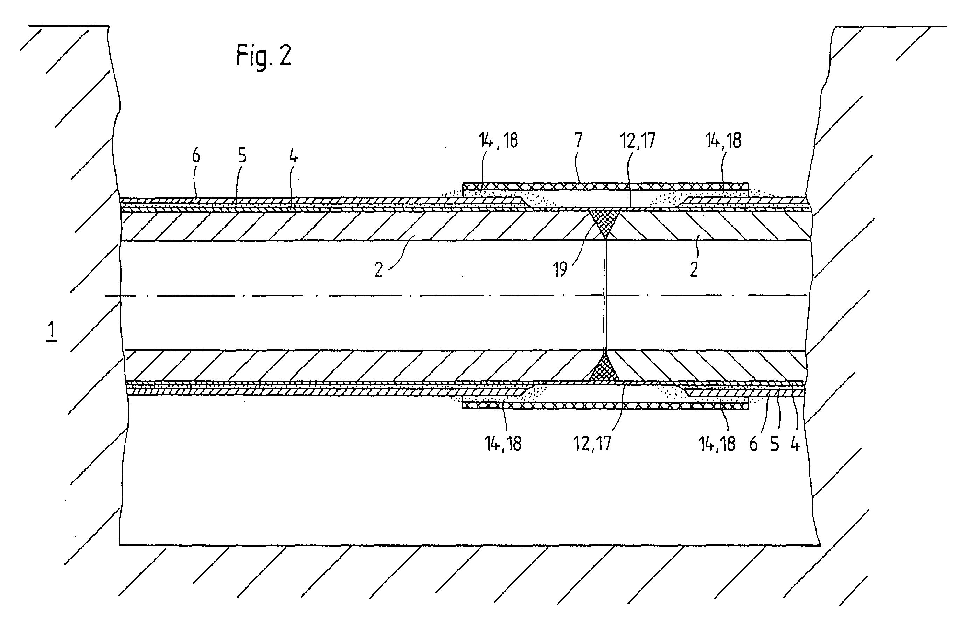

Fig. 2 zeigt, wie der Schrumpfschlauch 7 nach dem Aufbringen der Epoxidharzschicht 17 im Bereich der Schweißzone 3 und die Kleberschichten 18 in den sich, entsprechend der Ausbildung der Fächer 13 der Behälter 9 und 10, welche in der Darstellung gemäß Fig. 2 bereits entfernt wurden, an den Bereich der Schweißzone 3 anschließenden Bereichen, über diese Bereiche verschoben ist.

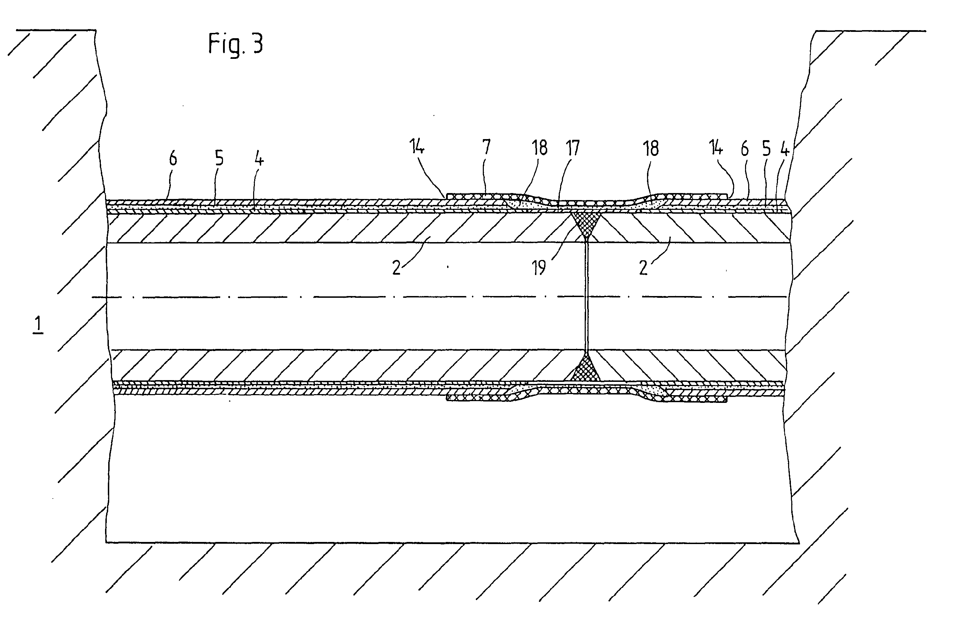

Fig. 3 zeigt die nach dem Aufschrumpfen des Schrumpfschlauches 7 aufgebildete Isolierung der Schweißverbindung der Stahlrohre 2. Dabei ist zu erkennen, daß der Schrumpfschlauch 7 so aufgeschrumpft ist, daß der Kleber der Klebeschichten 18 den Schrumpfschlauch 7 dichtschließend aus dem Schrumpfschlauch 7 ausgetreten ist. Gleichzeitig ist der Kleber durch das Aufschrumpfen des Schrumpfschlauches 7 im Bereich oberhalb der Epoxidharzschicht 17 verteilt.

Insgesamt ist damit im Bereich der Schweißverbindung der Stahlrohre 2 die aus den Schichten 4, 5 und 6 der Stahlrohre 2 gebildete Isolierung im Bereich der Schweißzone 3 durch die Epoxidharzschicht 17, die Klebeschicht 18 und den aufgeschrumpften Schrumpfschlauch 7 nachgebildet.

### Bezugszeichenliste

- 1: Baugrube
- 2: Stahlrohr
- 3: Schweißzone
- 4: Grundschicht
- 5: Kleberschicht
- 6: Polyethylenschicht
- 7: Schrumpfschlauch
- 8: Sieböffnung
- 9: Behälter
- 10: Behälter
- 11: Fach
- 12: Epoxidharz, pulverförmig
- 13: Fach
- 14: Kleber, pulverförmig
- 15: Rüttelbewegung Behälter 9
- 16: Stickstoffbeblasung
- 17: Epoxidharzschicht
- 18: Kleberschicht
- 19: Schweißverbindung

## Patentansprüche

1. Verfahren zur Isolierung der Schweißverbindung (19) von mit Ausnahme vom Bereich der Schweißzone (3) isolierten Rohren (2), insbesondere von 3-Schichten-korrosionsgeschützten Stahlrohren (2), wobei vor dem Verschweißen der miteinander zu verschweißenden Rohre (2) ein Schrumpfschlauch (7) auf eines der Rohre (2) aufgeschoben wird, die Rohre (2) miteinander verschweißt werden, im Bereich der Schweißzone (3) eine Epoxidharzschicht (17) aufgebracht wird, im Bereich von der Schweißzone (3) bis zu einer äußersten Isolierschicht (6) der Rohre (2) eine Kleberschicht (18) aufgebracht wird, der Schrumpfschlauch (7) über den Bereich der Schweißzone (3) verschoben wird, so daß zumindest die mit der Kleberschicht (18) versehenen Bereiche vom Schrumpfschlauch (7) abgedeckt sind, und der Schrumpfschlauch (7) aufgeschrumpft wird, so daß der Kleber (14) aus dem Schrumpfschlauch (7) den Schrumpfschlauch (7) dichtschließend austritt und sich oberhalb der Epoxidharzschicht (17) verteilt.

2. Verfahren nach Anspruch 1, **dadurch gekennzeichnet, daß** die Epoxidharzschicht (17) in Pulverform aufgebracht wird.

3. Verfahren nach Anspruch 1 oder 2, **dadurch gekennzeichnet, daß** die Kleberschicht (18) in Pulverform aufgebracht wird.

4. Verfahren nach einem der Ansprüche 1 bis 3, **dadurch gekennzeichnet, daß** die Schweißzone (3) vor dem Aufbringen der Epoxidharzschicht erwärmt wird.

5. Verfahren nach Anspruch 4, **dadurch gekennzeichnet, daß** die Schweißzone (3) induktiv erwärmt wird.

6. Verfahren nach Anspruch 4, **dadurch gekennzeichnet, daß** die Schweißzone (3) konduktiv erwärmt wird.

7. Verfahren nach einem der Ansprüche 2 bis 6, **dadurch gekennzeichnet, daß** das Epoxidharzpulver (12) und/oder das Kleberpulver (14) zum Auftragen mit einem gasförmigen Medium (16) durch Sieböffnungen (8) geblasen werden, vorzugsweise mit Sauerstoff oder Stickstoff.

8. Verfahren nach Anspruch 7, **dadurch gekennzeichnet, daß** das Medium erwärmt ist, vorzugsweise auf eine Temperatur zwischen 30° C und 60° C.

9. Verfahren nach einem der Ansprüche 2 bis 8, **dadurch gekennzeichnet, daß** das Epoxidharz- und/oder Kleberpulver mit einem mittleren Korndurchmesser zwischen 10µm und 20 um verwendet wird.

10. Verfahren nach einem der Ansprüche 2 bis 9, **dadurch gekennzeichnet, daß** das Pulver durch Wirbelsintern aufgebracht wird.

11. Verfahren nach einem der Ansprüche 1 bis 10, **dadurch gekennzeichnet, daß** die Epoxidharzschicht mit einer Dicke zwischen 10 um und 100 um, vorzugsweise mit 50 um aufgebracht wird.

12. Verfahren nach einem der Ansprüche 1 bis 11, **dadurch gekennzeichnet, daß** die Oberfläche der Rohrenden der miteinander zu verschweißenden Rohre (2) vor dem Verschweißen gesäubert wird.

13. Verfahren nach einem der Ansprüche 1 bis 12, **dadurch gekennzeichnet, daß** die Epoxidharzschicht (17) und die Kleberschicht gleichzeitig aufgetragen werden.

14. Isolierung der Schweißverbindung von isolierten Rohren, insbesondere von 3-Schichten-Korrosionsgeschützten Stahlrohren, wobei die Schweißzone (3) mit einer Epoxidharzschicht versehen ist, auf welcher eine sich von der Schweißzone (3) bis zumindest zur äußeren Isolierschicht (6) der Rohre (2) erstreckende Kleberschicht (18) aufgebracht ist, welche von einem aufgeschrumpften Schrumpfschlauch (7) umhüllt ist, wobei die Kleberschicht (18) den Schrumpfschlauch (7) dicht verschließt und über der Epoxidharzschicht (17) angeordnet ist.

15. Isolierung nach Anspruch 14, **dadurch gekennzeichnet, daß** die Dicke der Epoxidharzschicht (17) zwischen 10 µm und 100 µm beträgt, vorzugsweise etwa 50 µm.

16. Isolierung nach Anspruch 14 oder Anspruch 15, **dadurch gekennzeichnet, daß** diese nach einem Verfahren nach einem der Ansprüche 1 bis 13 hergestellt ist.
